# EUROPÄISCHE PATENTSCHRIFT

(11) **EP 2 110 201 B1**
(45) Veröffentlichungstag und Bekanntmachung des Hinweises auf die Patenterteilung: **04.05.2011**
(21) Anmeldenummer: 08007382.8
(22) Anmeldetag: 15.04.2008
(51) Int. Cl.: B23Q 1/58, F16H 19/00, F16H 25/20

(54) **Elektrischer Linearantrieb**
Electric linear drive device
Entraînement linéaire électrique

(43) Veröffentlichungstag der Anmeldung: 21.10.2009
(73) Patentinhaber: FESTO AG & Co. KG, 73734 Esslingen (DE)
(72) Erfinder: Angué, Eric, 70806 Kornwestheim (DE); Konermann, Rainer, 72622 Nürthingen (DE); Oehlmann, Kristin, 70569 Stuttgart (DE)
(74) Vertreter: Abel, Martin

(56) Entgegenhaltungen:
- EP-A- 1 353 093
- EP-B- 0 735 296
- EP-B- 1 182 359
- WO-A-2008/032174
- DE-A1- 19 532 759
- FR-A- 2 684 034
- Januar 2008 (2008-01), ITEM INDUSTRIETECHNIK GMBH , XP009103118 Gefunden im Internet: URL:http://www.item.info/fileadmin/pdf/neu heiten/en-mb--kle-neuheiten-0108.pdf> [gefunden am 2008-07-14] * Seiten 1-16 *

## Beschreibung

Die Erfindung betrifft einen elektrischen Linearantrieb, mit einem Gehäuse, das ein sich längs einer zentralen Mittelachse erstreckendes Hohlprofilteil aufweist, in dem sich ein Antriebselement längs erstreckt, das elektromotorisch zu einer Antriebsbewegung antreibbar ist, aus der eine in Längsrichtung des Hohlprofilteils orientierte lineare Abtriebsbewegung eines Abtriebsteils resultiert, das an einer Haupt-Außenfläche des Hohlprofilteils angeordnet und durch einen in der Wandung des Hohlprofilteils ausgebildeten, außen zu der Haupt-Außenfläche ausmündenden Längsschlitz hindurch mit dem Antriebselement antriebsmäßig gekoppelt ist, wobei die mittige Längsachse des Längsschlitzes und die zur Mittelachse des Hohlprofilteils parallele Mittelachse des Antriebselementes in einer die Haupt-Außenfläche schneidenden gemeinsamen Antriebsebene liegen.

Ein aus der DE 195 32 759 A1 bekannter und dort insbesondere anhand Fig. 9 beschriebener elektrischer Linearantrieb dieser Art enthält ein quadratisch konturiertes Hohlprofilteil mit einem an einer Haupt-Außenfläche verschiebbar gelagerten schlittenartigen Abtriebsteil. Das Abtriebsteil kann durch ein das Hohlprofilteil durchsetzendes Antriebselement zu einer Linearbewegung längs des Hohlprofilteils angetrieben werden. Hierbei ist das Abtriebsteil durch einen in der Wandung des Hohlprofilteils ausgebildeten Längsschlitz hindurch mit dem Antriebselement bewegungsgekoppelt, das beispielsweise als um Umlenkrollen umlaufender Zahnriemen oder als Gewindespindel ausgeführt ist. Die Mittelachse des Antriebselementes, die Mittelachse des Hohlprofilteils und die mittige Längsachse des Längsschlitzes liegen in einer gemeinsamen, zu der Haupt-Außenfläche rechtwinkeligen Antriebsebene, zu deren beiden Seiten mit gleichem Abstand an der Haupt-Außenfläche zwei Führungsschienen platziert sind, an denen das Abtriebsteil verschiebbar geführt ist. Im Querschnitt gesehen ergibt sich somit ein völlig symmetrischer Aufbau.

Aus der EP 0 735 296 B1 ist ein als Zahnriemenantrieb konzipierter Linearantrieb bekannt, bei dem die von einem Zahnriemen umschlungenen Umlenkrollen in Abschlussdeckeln gelagert sind, zwischen denen sich ein Hohlprofilteil erstreckt. Auch hier fällt die zentrale Mittelachse des Hohlprofilteils in die mit der Umlaufebene des Zahnriemens zusammenfallende Antriebsebene.

Entsprechendes gilt für den aus der FR 2 684 034 A1 bekannten elektrischen Linearantrieb, bei dem die Umlenkrollen in den Endabschnitten des Hohlprofilteils gelagert sind, so dass die Abschlussdeckel lediglich eine Verschlussfunktion übernehmen.

Aus der deutschsprachigen Produktinformation "Dynamik in Form" sowie der korrespondierenden englischsprachigen Produktinformation "Dynamic by Design", Ausgabe 01/2008, der item Industrietechnik GmbH, geht jeweils aus Seiten 4 und 8 eine Lineareinheit mit Zahnriemen hervor, bei der an einen Abschlussdeckel unter Zwischenschaltung eines Kupplungsgehäuses eine elektromotorische Antriebseinrichtung angebaut ist, die mit einer der Umlenkrollen in Drehantriebsverbindung steht. Das Kupplungsgehäuse enthält eine Kupplungseinrichtung, über die das Drehmoment vom Antriebsmotor auf die Umlenkrolle übertragen wird. Durch das außen an den Abschlussdeckel angeflanschte Kupplungsgehäuse ergeben sich relativ große Querabmessungen des Linearantriebes.

Die EP 1 182 359 B1, die die Merkmale des Oberbegriffs des Anspruchs 1 enthält, schließlich beschreibt einen Linearantrieb mit einem Hohlprofilteil, in dem sich ein beispielsweise als Gewindespindel ausgeführtes Antriebselement erstreckt, das über einen einen Längsschlitz durchsetzenden Mitnehmer mit einem an einer Haupt-Außenfläche des Hohlprofilteils gelagerten Abtriebsteil verbunden ist. Zur Lagerung des Abtriebsteils dient eine einzige, an der Haupt-Außenfläche angeordnete Führungsschiene. Der Längsschlitz ist schräg orientiert, wobei eine von der mittigen Längsachse des Längsschlitzes und der Mittelachse des Antriebselementes aufgespannte Antriebsebene durch die parallel verlaufende zentrale Mittelachse des Hohlprofilteils verläuft. Das Antriebselement sitzt zentral im Inneren des Hohlprofilteils.

Es ist die Aufgabe der vorliegenden Erfindung, Maßnahmen zu treffen, die bei einem elektrischen Linearantrieb der eingangs genannten Art in Verbindung mit einem kostengünstigen Aufbau verbesserte Platzverhältnisse schaffen.

Zur Lösung dieser Aufgabe ist ein Aufbau vorgesehen, bei dem die Antriebsebene mit Abstand quer versetzt neben der Mittelachse des Hohlprofilteils verläuft.

Somit erstreckt sich die durch die mittigen Längsachsen von Antriebselement und Längsschlitz hindurchgehende Antriebsebene außermittig durch das Hohlprofilteil hindurch. Antriebselement und Längsschlitz sind bezüglich der zentralen Mittelachse des Hohlprofilteils quer versetzt, so dass sich diesseits und jenseits der Antriebsebene unterschiedlich breite Längenabschnitte des Hohlprofilteils ergeben, wobei sich der breitere Längenabschnitt aufgrund seines größeren Volumens sehr gut für erforderliche Einbauten und/oder Anbauten nutzen lässt. Beispielsweise kann am breiten Abschnitt der Haupt-Außenfläche eine einzige Führungsschiene zur Verschiebelagerung des Abtriebsteils installiert werden, die eine für die erforderliche Stabilität ausreichend große Breite besitzt, gleichwohl jedoch wesentlich günstiger zu realisieren ist als eine Doppelanordnung von Führungsschienen diesseits und jenseits der Antriebsebene. Auch lässt sich der breitere Längenabschnitt des Hohlprofilteils optimal nutzen, um beispielsweise eine nur einseitige und dennoch stabile Drehlagerung von Umlenkrollen vorzusehen, wenn als Antriebselement ein Zahnriemen genutzt wird. In Verbindung mit einem Zahnriemenantrieb ergibt sich auch der Vorteil, dass durch die versetzte Anordnung der Antriebsebene in stirnseitig an das Hohlprofilteil angebauten Abschlussdeckeln ein vergrößertes Raumangebot besteht, das genutzt werden kann, um eine zum Ankoppeln einer elektromotorischen Antriebseinrichtung zweckmäßige Kupplungseinrichtung platzsparend unterzubringen. In diesem Fall erübrigt sich ein gesondertes Kupplungsgehäuse.

Vorteilhafte Weiterbildungen der Erfindung gehen aus den Unteransprüchen hervor.

Die Haupt-Außenfläche des Hohlprofilteils ist vorzugsweise so angeordnet, dass sie in einer zu der Antriebsebene rechtwinkeligen Hauptebene verläuft. Diese erstreckt sich insbesondere parallel zu einer an der entgegengesetzten Außenseite des Hohlprofilteils vorgesehenen Grundfläche, von deren Längsrändern sich je eine Seitenfläche in Richtung zur Haupt-Außenfläche erstreckt. Die Mittelachse des Hohlprofilteils liegt hierbei insbesondere in einer zu der Grundfläche rechtwinkeligen, mit gleichem Abstand zu den beiden Längsrändern der Grundfläche angeordneten Mittelebene.

Eine optimale Linearführung für das Abtriebsteil lässt sich mittels einer außerhalb des Hohlprofilteils liegenden Linearführungseinrichtung realisieren. Hierbei läuft das Abtriebsteil an mindestens einer an der Haupt-Außenfläche angeordneten Führungsschiene. Diese mindestens eine Führungsschiene sitzt zweckmäßigerweise ausschließlich auf derjenigen Seite der Antriebsebene, auf der auch eine zu der Antriebsebene parallele, zugleich die Mittelachse des Hohlprofilteils enthaltende Mittelebene verläuft. Hier steht relativ viel Platz zur Anbringung einer oder mehrerer Führungsschienen zur Verfügung. Besonders kostengünstig ist hierbei eine Ausstattung mit einer einzigen Führungsschiene, die bei entsprechender Breite eine qualitativ hochwertige Lagerung gewährleistet, verbunden mit einem wesentlich geringeren Herstellungs- und Montageaufwand als bei Verwendung von zwei Führungsschienen.

Zweckmäßig ist eine Anordnung, bei der die mittige Längsachse der Führungsschiene, und zweckmäßigerweise die Führungsschiene in ihrer Gesamtheit, auf der der Antriebsebene abgewandten Seite der Mittelebene sitzt. Auf diese Weise ergibt sich eine optimale Spreizung zwischen der Führungsschiene und dem Längsschlitz, durch den hindurch die antriebsmäßige Kopplung zwischen dem Abtriebsteil und den dem Antriebselement stattfindet.

Unabhängig vom Typ des Linearantriebes ist es in der Regel vorteilhaft, wenn das Antriebselement in stirnseitig an das Hohlprofilteil angebauten, bezüglich dem Hohlprofilteil separaten Abschlussdeckeln gelagert ist. In Verbindung mit einem als Zahnriemen ausgeführten Antriebselement können hier die Umlenkrollen untergebracht werden, so dass sich innerhalb des Hohlprofilteils spezielle Lagerungsmaßnahmen erübrigen und das Hohlprofilteil ohne großen Fertigungsaufwand in unterschiedlichen Längen zur Verfügung gestellt werden kann.

Auch wenn als Antriebselement eine Gewindespindel zum Einsatz kommt, lässt sich diese in den Abschlussdeckeln einfach und zuverlässig drehlagern.

Enthält ein Gehäuse stirnseitige Abschlussdeckel, können dessen diesseits und jenseits der Antriebsebene liegenden seitlichen Außenflächen für den Anbau einer mit dem Antriebselement zusammenwirkenden elektromotorischen Antriebseinrichtung genutzt werden. Besonders vorteilhaft ist es hierbei, diejenige der beiden seitlichen Außenflächen, die den größeren Abstand zur Antriebsebene aufweist, als Montagefläche für eine elektromotorische Antriebseinrichtung auszubilden und die zur Verbindung mit dem Antriebselement regelmäßig erforderliche Kupplungseinrichtung innerhalb des Abschlussdeckels unterzubringen, so dass dieser zugleich ein Kupplungsgehäuse bildet, was die insgesamt auftretenden Querabmessungen des Linearantriebes reduziert.

Zweckmäßigerweise kann die entgegengesetzte seitliche Außenfläche als weitere Montagefläche genutzt werden, an der in konventionaler Weise eine Antriebseinrichtung unter zwischenschaltung eines separaten Kupplungsgehäuses angeflanscht werden kann.

Ist der Linearantrieb als Zahnriemenantrieb ausgebildet, verfügt der Zahnriemen zweckmäßigerweise über einen sich längs des Längsschlitzes erstreckenden Antriebstrum, der mit dem Abtriebsteil bewegungsgekoppelt ist. Letzteres geschieht insbesondere dadurch, dass der Antriebstrum unterteilt ist und die beiden daraus resultierenden Endabschnitte des Zahnriemes jeweils gesondert unter Vermittlung eines Verbindungselementes lösbar an dem Abtriebsteil fixiert sind.

Ist der Linearantrieb als Spindelantrieb ausgebildet, sitzt auf der das Hohlprofilteil durchsetzenden Gewindespindel zweckmäßigerweise eine durch Rotation der Gewindespindel zu einer Linearbewegung antreibbare Spindelmutter, die durch den Längsschlitz hindurch mit dem Abtriebsteil bewegungsgekoppelt ist.

Nachfolgend wird die Erfindung anhand der beiliegenden Zeichnung näher erläutert. In dieser zeigen:

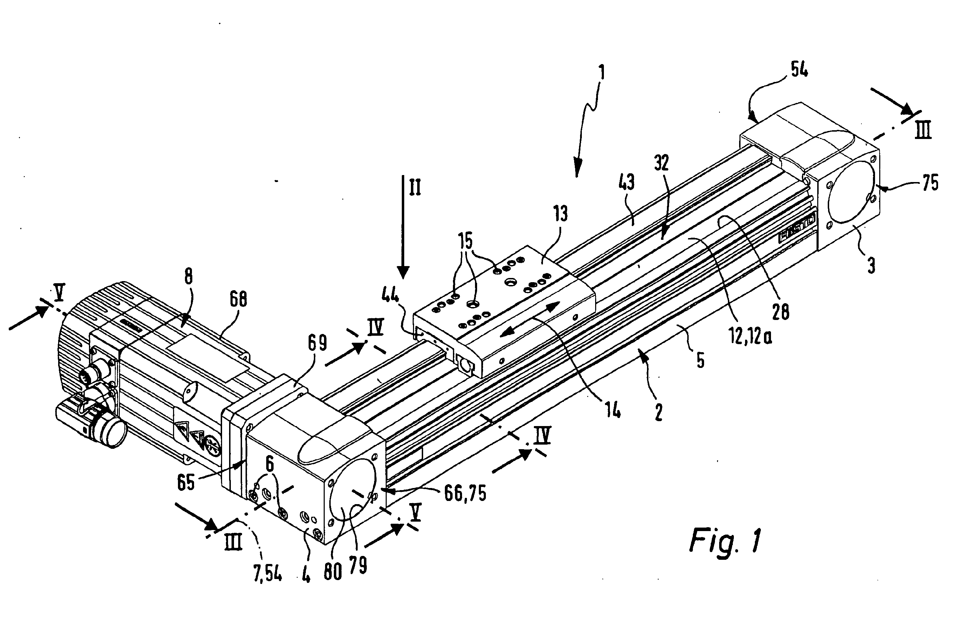

- Fig. 1: eine perspektivische Darstellung einer bevorzugten Ausführungsform des erfindungsgemäßen Linearantrie- bes in einer Ausgestaltung als Spindelantrieb,

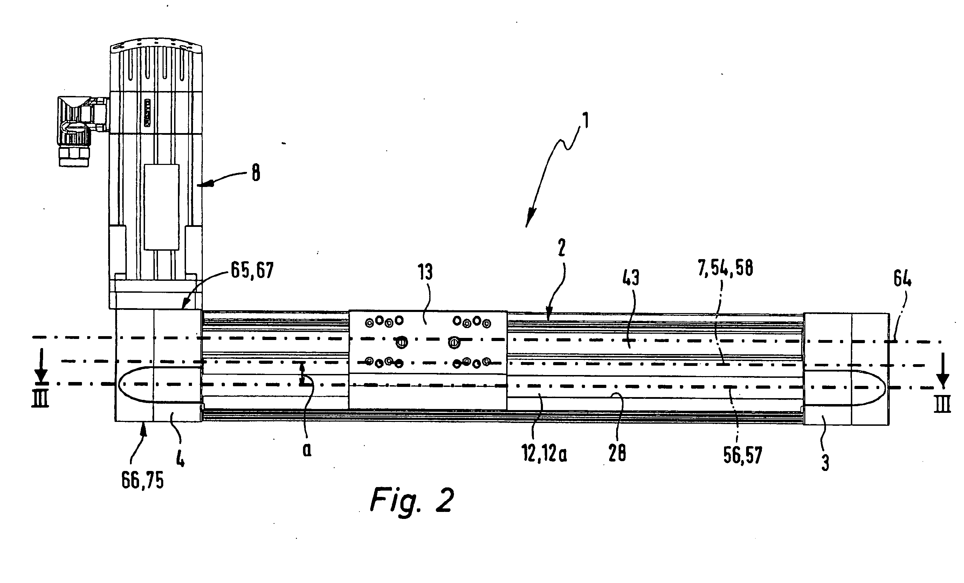

- Fig. 2: eine Draufsicht auf den Linearantrieb mit Blick auf die Haupt-Außenfläche in Richtung des Pfeils II aus Fig. 1,
- Fig. 3: einen Längsschnitt durch den Linearantrieb gemäß Schnittlinie III-III aus Fig. 1 und 2,
- Fig. 4: einen Querschnitt durch den Linearantrieb im Be- reich des Hohlprofilteils gemäß Schnittlinie IV-IV aus Fig. 1, und
- Fig. 5: einen weiteren Querschnitt durch den Linearantrieb im Bereich eines mit einem Elektromotor bestückten Abschlussdeckels gemäß Schnittlinie V-V aus Fig. 1.

Der insgesamt mit Bezugsziffer 1 bezeichnete elektrische Linearantrieb enthält ein Längserstreckung aufweisendes Gehäuse 2 bestehend aus einem ersten und einem zweiten Abschlussdekkel 3, 4 und einem dazwischen liegenden strangförmigen Hohlprofilteil 5. Die Abschlussdeckel 3, 4 sind an die voneinander abgewandten Stirnflächen des Hohlprofilteils 5 angesetzt und mit letzterem durch Schrauben 6 fest verbunden. Die Längsachse des Gehäuses 2 ist strichpunktiert bei 7 angedeutet.

An den zweiten Abschlussdeckel 4 ist seitlich eine elektromotorische Antriebseinrichtung 8 lösbar angebaut. Sie steht mit einem im Inneren des Gehäuses 2 angeordneten, das Hohlprofilteil 5 längs durchsetzenden Antriebselement 12 in antriebsmäßiger Verbindung, das mit einem außen an dem Hohlprofilteil 5 angeordneten Abtriebsteil 13 bewegungsgekoppelt ist. Durch Betätigung der Antriebseinrichtung 8 kann das Abtriebsteil 13 zu einer durch einen Doppelpfeil angedeuteten, hin- und hergehenden linearen Abtriebsbewegung 14 in Achsrichtung der Längsachse 7 entlang des Hohlprofilteils 5 angetrieben werden. Auf diese Weise lässt sich ein nicht weiter abgebildetes Bauteil bewegen, das an dem Abtriebsteil 13 mittels daran angeordneter Befestigungsmittel 15 fixierbar ist.

Das Ausführungsbeispiel zeigt einen als Zahnriemenantrieb ausgebildeten Linearantrieb. Im Inneren der beiden Abschlussdeckel 3, 4 befindet sich je eine nach Art eines Zahnrades ausgebildete, drehbar gelagerte Umlenkrolle 16, deren mit der Drehachse zusammenfallende Längsachsen 17 rechtwinkelig zu der Längsachse 7 und zueinander parallel ausgerichtet sind. Ein das Antriebselement 12 bildender Zahnriemen 12a ist um die beiden Umlenkrollen 16 herumgeschlungen und führt in einer Umlaufebene 18 eine durch einen Doppelpfeil angedeutete hin- und hergehende Umlaufbewegung 22a aus, wenn er durch eine der Umlenkrollen 16 dazu angetrieben wird. Exemplarisch ist die im zweiten Abschlussdeckel 4 angeordnete Umlenkrolle 16 als Antriebsrolle ausgebildet, indem sie über eine Kupplungseinrichtung 23 mit der rotativ antreibbaren Abtriebswelle 24 der Antriebseinrichtung 8 drehfest verbunden ist.

Der Zahnriemen 12a verfügt über zwei zueinander parallele, sich zwischen den Umlenkrollen 16 erstreckende erste und zweite Trume 25, 26, von denen der erste Trum 25 im Folgenden als Antriebstrum bezeichnet sei. Letzterer erstreckt sich in einem das Hohlprofilteil 5 längs durchsetzenden Aufnahmekanal 27, der über einen in der Wandung des Hohlprofilteils 5 ausgebildeten Längsschlitz 28 zu einer als Haupt-Außenfläche 32 bezeichneten längsseitigen Außenfläche des Hohlprofilteils 5 offen ist. Der Längsschlitz 28 geht also außen in die Haupt-Außenfläche 32 und innen in den Aufnahmekanal 27 über. Vorzugsweise ist der Aufnahmekanal 27 nur geringfügig zu der Haupt-Außenfläche 32 beabstandet, so dass die Höhe des Längsschlitzes 28 relativ gering ist.

Zweckmäßigerweise hat der Längsschlitz 28 eine geringere Breite als der Zahnriemen 12a, so dass letzterer den Längsschlitz 28 von innen her abdeckt und ein Eindringen von Verunreinigungen ins Gehäuseinnere verhindert.

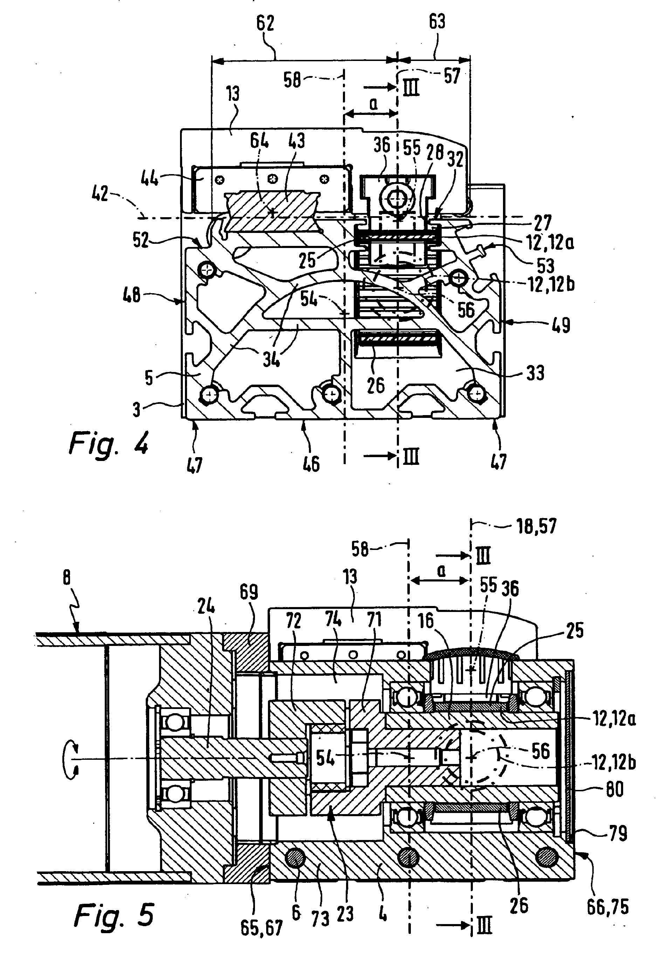

Wie aus Fig. 4 ersichtlich ist, erstreckt sich der zweite Trum 26 durch einen bezüglich dem Aufnahmekanal 27 gesonderten Hohlkörperkanal 33 hindurch. Das Hohlprofilteil 5 ist insgesamt von mehreren durch Zwischenwände 34 voneinander abgeteilten Kanälen längs durchzogen, so dass es über eine geringe Materialdichte bei zugleich hoher Steifigkeit verfügt. Prinzipiell könnte das Hohlprofilteil 5 auch als einfacher, an einer Stelle seines Umfanges längsgeschlitzter Rohrkörper ausgeführt sein.

Der Antriebstrum 25 ist nicht zusammenhängend ausgebildet, sondern unterteilt, so dass sich zwei einander zugewandte Endabschnitte 35 des Zahnriemens 12a ergeben. Diese beiden Endabschnitte 35 sind durch den Längsschlitz 28 hindurch unabhängig voneinander am Abtriebsteils 13 befestigt. Je nach Umlaufrichtung des Zahnriemens 12a übt somit entweder der eine oder der andere Endabschnitt 35 eine eine Abtriebsbewegung 14 hervorrufende Zugkraft auf das Abtriebsteil 13 aus.

Vorzugsweise ist jeder Endabschnitt 35 an einem bezüglich dem Abtriebsteil 13 separat ausgebildeten Verbindungselement 36 fixiert, insbesondere durch eine Klemmung, wobei beide Verbindungselemente 36 durch je mindestens ein Spannelement 37 in der Achsrichtung der Längsachse 7 mit dem Abtriebsteil 13 verspannt sind. Entsprechend der gewählten Spannkraft lässt sich die Spannung des Zahnriemens 12a einstellen.

Um eine schlupffreie Kraftübertragung zu gewährleisten, ist der Zahnriemen 12a mit einer Innenverzahnung 38 versehen, die mit der Außenverzahnung der als Zahnräder ausgebildeten Umlenkrollen 16 in Eingriff steht.

Das Abtriebsteil 13 ist im Bereich der Haupt-Außenfläche 32 außen am Hohlprofilteil 5 angeordnet. Die Haupt-Außenfläche 32 erstreckt sich zweckmäßigerweise in einer als Hauptebene 42 bezeichneten Ebene.

Im Bereich der Haupt-Außenfläche 32 ist eine sich in Achsrichtung der Längsachse 7 erstreckende Führungsschiene 43 am Hohlprofilteil 5 angeordnet. Sie steht rechtwinkelig zu der Hauptebene 42 über die Haupt-Außenfläche 32 vor. An ihr ist das zweckmäßigerweise als Schlittenelement ausgebildete Abtriebsteil 13 in Längsrichtung verschiebbar gelagert und zugleich in Querrichtung abgestützt. Dadurch ist dem Abtriebsteil 13 seine Bewegungsbahn vorgegeben.

Vorzugsweise ist die Führungsschiene 43 von dem Abtriebsteil 13 reiterartig übergriffen. An dem Abtriebsteil 13 können noch ein oder mehrere Führungselemente 44 angeordnet sein, über die das unmittelbare Zusammenwirken mit der Führungsschiene 43 durchgeführt wird und die mit Gleitlagermitteln oder Wälzlagermitteln ausgestattet sind. Die Führungsschiene 43 erstreckt sich zweckmäßigerweise über die gesamte Länge des Hohlprofilteils 5 und besteht vorzugsweise aus einem gehärtetem Stahlmaterial, das in das zweckmäßigerweise aus Aluminiummaterial bestehende Hohlprofilteil 5 eingesetzt ist.

Zweckmäßigerweise ist nur eine einzige Führungsschiene 43 zur Lagerung des Abtriebsteils 13 am Hohlprofilteil 5 vorhanden. Dies minimiert den Herstellungsaufwand.

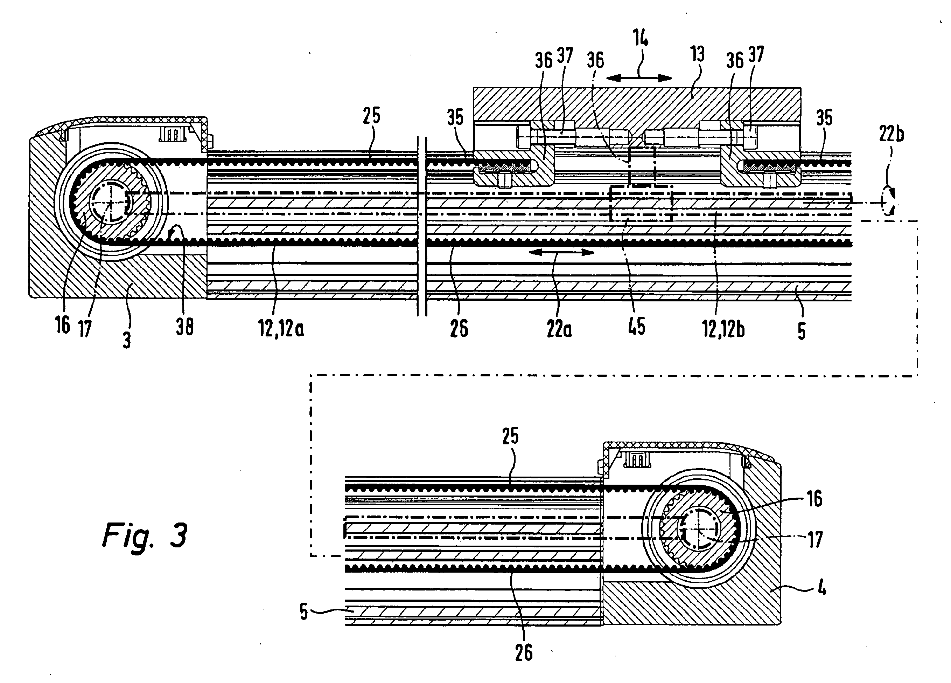

Bei einer in den Fig. 3 bis 5 hinsichtlich seiner Modifikationen strichpunktiert angedeuteten alternativen Bauform ist der Linearantrieb 1 als Spindelantrieb ausgebildet. Hier besteht das Antriebselement 12 aus einer Gewindespindel 12b, die sich in Achsrichtumg der Längsachse 7 durch einen der Kanäle des Hohlprofilteils 5 hindurch erstreckt und die im Inneren der beiden Abschlussdeckel 3, 4 drehbar gelagert ist. Sie kann durch die Antriebseinrichtung 8 zu einer Rotationsbewegung 22b um ihre Längsachse angetrieben werden, was dazu führt, dass eine auf ihr sitzende Spindelmutter 45 entlang der Gewindespindel 12b eine Linearbewegung ausführt, die über ein den Längsschlitz 28 durchsetzendes Verbindungselement 36 auf das Abtriebsteil 13 übertragen wird.

Wie aus Fig. 4 ersichtlich ist, verfügt das Hohlprofilteil 5 über einen im Wesentlichen rechteckigen Grundriss. An der der Haupt-Außenfläche 32 entgegengesetzten Unterseite besitzt es eine zur Haupt-Außenfläche 32 parallele Grundfläche 46, von deren beiden Längsrändern 47 jeweils eine zur Grundfläche 46 rechtwinkelige Seitenfläche 48, 49 in Richtung zur Haupt-Außenfläche 32 abgeht. Die eine, erste Seitenfläche 48 geht über eine Abstufung 52 in die Haupt-Außenfläche 32 über, die andere, zweite Seitenfläche 49 über eine Abschrägung 53.

Das Hohlprofilteil 5 verfügt über eine gedachte zentrale Mittelachse 54, entlang der es sich erstreckt und die beim Ausführungsbeispiel mit der Längsachse 7 zusammenfällt. Der Längsschlitz 28 besitzt eine gedachte mittige Längsachse 55, die parallel zu der vorgenannten Zentralen Mittelachse 54 verläuft. Schließlich verfügt das Antriebselement 12 über eine gedachte zentrale Mittelachse 56, die sich parallel zur Mittelachse 54 des Hohlprofilteils 5 und zur mittigen Längsachse 55 des Längsschlitzes 28 erstreckt.

Die Mittelachse 56 des Antriebselementes 12 erstreckt sich bei einer Ausgestaltung als Zahnriemen 12a mittig zwischen den beiden Trumen 25, 26 und bei einer Ausgestaltung als Gewindespindel 12b entlang deren mittiger Längsachse.

Die Mittelachse 56 des Antriebselementes 12 und die dazu parallele mittige Längsachse 55 des Längsschlitzes 28 verlaufen gemeinsam in einer als Antriebsebene 57 bezeichneten Ebene, die die Haupt-Außenfläche 32 schneidet. Die Antriebsebene 57 verläuft zweckmäßigerweise rechtwinkelig zu sowohl der Haupt-Außenfläche 32 als auch zu der dieser entgegengesetzten Grundfläche 46. Bei einer Ausführung als Zahnriemenantrieb fällt sie mit der Umlaufebene 18 zusammen.

Ein besonderer Vorteil resultiert daraus, dass die Antriebsebene 57 um einen Abstand "a" quer versetzt neben der Mittelachse 54 des Hohlprofilteils 5 liegt. Sie erstreckt sich also außermittig durch den Querschnitt des Hohlprofilteils 5. Der gleiche Querversatz "a" liegt zwischen der Antriebsebene 57 und einer hierzu parallelen Mittelebene 58 vor, die die Mittelachse 54 des Hohlprofilteils 5 enthält und zugleich rechtwinkelig zu der Grundfläche 46 und/oder zu der Haupt-Außenfläche 32 verläuft.

Die bevorzugt einzige Führungsschiene 43 liegt mit Ihrem gesamten Querschnitt auf der gleichen Seite der Antriebsebene 57, auf der auch die Mittelebene 58 liegt. Nachdem die Antriebsebene 57 die Haupt-Außenfläche 32 in einen Flächenabschnitt 62 größerer Breite und einen Flächenabschnitt 63 geringerer Breite unterteilt, liegt die Führungsschiene 43 innerhalb des Flächenabschnitte 62 größerer Breite.

Vorzugsweise ist die Anordnung zusätzlich so getroffen, dass zumindest die mittige Längsachse 64 der Führungsschiene 43 und vorzugsweise die Führungsschiene 43 mit ihrem gesamten Querschnitt auf der der Antriebsebene 57 abgewandten Seite der Mittelebene 58 liegt. Auf diese Weise ist die Haupt-Außenfläche 32 optimal ausgenutzt und es ergibt sich eine konstruktiv einfache und kostengünstige Bauform, da sich die Maßnahmen zur Realisierung der Führungsschiene 43 auf einen eng begrenzten Bereich der Haupt-Außenfläche 32 beschränken.

Aus der asymmetrischen Anordnung des Antriebselementes 12 innerhalb des Hohlprofilteils 5 resultiert auch eine entsprechend außermittige Anordnung der Lagerungsmittel für das Antriebselement 12 im Inneren der Abschlussdeckel 3, 4. Diese Lagerungsmittel sind bei einem Zahnriemenantrieb die Umlenkrollen 16 und bei einem Spindelantrieb an die Gewindespindel 12b angepasste Lagerelemente. Da diese Lagerungsmittel in unmittelbarer Verlängerung des Antriebselementes 12 in den Abschlussdeckeln 3, 4 angeordnet sind, schneidet die Antriebsebene 57 die Abschlussdeckel 3, 4 in gleicher Weise wie das Hohlprofilteil 5 außermittig, um einen Abstand "a" quer versetzt zu der Mittelachse 54 und der diese enthaltenden Mittelebene 58. Diese asymmetrische Anordnung in Bezug auf die Abschlussdeckel 3, 4 ist aus Fig. 5 gut ersichtlich. Die Fig. 4 zeigt im Übrigen, dass die rechtwinkelig zu der Antriebsebene 57 gemessene Breite der Abschlussdeckel 3, 4 im Wesentlichen derjenigen des Hohlprofilteils 5 entspricht, beim Ausführungsbeispiel liegt nur ein minimaler seitlicher Überstand bezüglich den Seitenflächen 48, 49 des Hohlprofilteils 5 vor.

Die asymmetrische Unterbringung des Antriebselementes 12 und der zugehörige Lagerungsmittel im Inneren der Abschlussdeckel 3, 4 ermöglicht eine besonders kompakte Realisierung der zur Kraftübertragung auf das Antriebselement 12 erforderlichen Maßnahmen.

Der zweite Abschlussdeckel 4 enthält eine gleich wie die erste Seitenfläche 48 des Hohlprofilteils 5 orientierte erste seitliche Außenfläche 65 und auf der entgegengesetzten Seite eine entgegengesetzt orientierte zweite seitliche Außenfläche 66. Beide seitlichen Außenflächen 65, 66 erstrecken sich zumindest im Wesentlichen parallel zu der Antriebsebene 57. Aufgrund der geschilderten Asymmetrie ist die erste seitliche Außenfläche 65 rechtwinkelig zu der Antriebsebene 57 mit größerem Abstand zu der Antriebsebene 57 angeordnet als die zweite seitliche Außenfläche 66.

Die erste seitliche Außenfläche 65 ist als erste Montagefläche 67 ausgebildet, an die die Antriebseinrichtung 8 unmittelbar angebaut ist. Die Antriebseinrichtung 8 enthält einen Elektromotor 68 und ein zu dessen Adaption an die erste Montagefläche 67 dienendes ringförmiges Flanschteil 69. Das Flanschteil 69 ist an die erste Montagefläche 67 angeschraubt, der Elektromotor 68 an das Flanschteil 69. Die Kraftübertragung zwischen dem Elektromotor 68 und dem Antriebselement 12 geschieht über die oben erwähnte Kupplungseinrichtung 23, die ein mit dem Antriebselement 12 drehfest verbundenes erstes Kupplungselement 71 aufweist sowie ein zweites Kupplungselement 72, das drehfest mit der an der Seite des zweiten Abschlussdeckels 4 aus der Antriebseinrichtung 8 herausragenden Motorwelle 24 des Elektromotors 68 verbunden ist. Beim Ansetzen des Elektromotors 68 an den zweiten Abschlussdeckel 4 gelangen die beiden Kupplungsteile 71, 72 in gegenseitigen dahingehenden Steckeingriff, dass ein Drehmoment übertragbar ist. Das erste Kupplungsteil 71 ist beim Ausführungsbeispiel drehfest mit der im zweiten Abschlussdekkel 4 angeordneten, als Antriebsrolle fungierenden Umlenkrolle 16 verbunden und steht bei einem Spindelantrieb über beispielsweise ein Winkelgetriebe mit der Gewindespindel 12b in Drehantriebsverbindung.

Aus dem oben geschilderten asymmetrischen Aufbau resultiert nun der Vorteil, dass die gesamte Kupplungseinrichtung 23 nicht außen an den zweiten Abschlussdeckel 4 angebaut werden muss, sondern im Inneren des zweiten Abschlussdeckels 4 zwischen der Antriebsebene 57 und der ersten Montagefläche 67 untergebracht werden kann. Insofern bildet der die Kupplungseinrichtung 23 umschließende Abschnitt des zweiten Abschlussdeckels 4 unmittelbar selbst ein Kupplungsgehäuse 73 für die Häusung der Kupplungseinrichtung 23.

Der die Kupplungseinrichtung 23 aufnehmende Aufnahmeraum 74 des zweiten Abschlussdeckels 4 ist außen zu der ersten Montagefläche 67 hin offen und schließt sich innen an das Umlenkrad 16 oder das alternativ vorgesehene Lagerungsmittel der Gewindespindel 12b an.

Sollte ein Anwender eine konventionelle Antriebsverbindung vorziehen, insbesondere weil er bereits eine konventionelle Kupplungseinrichtung mit eigenständigem Kupplungsgehäuse zur Verfügung hat, lässt sich alternativ zu der ersten Montagefläche 67 die zweite seitliche Außenfläche 66 als zweite Montagefläche 75 nutzen. Deren Abstand zu der Antriebsebene 57 ist wegen der asymmetrischen Anordnung relativ gering und ist daher prädestiniert zum Anbau eines eigenständigen Kupplungsgehäuses, das eine Kupplungseinrichtung enthält, deren mit dem Antriebselement 12 verbundenes erstes Kupplungsteil dann an der zweiten Montagefläche 75 aus dem zweiten Abschlussdekkel 4 herausragt.

Für den Durchgriff der Antriebsmittel ist der zweite Abschlussdeckel 4 an jeder Montagefläche 67, 75 mit einer den Zugang ins Innere des zweiten Abschlussdeckels 4 ermöglichenden Öffnung 79 versehen. Die nicht genutzte Öffnung 79 ist lösbar mittels eines Deckels 80 verschließbar.

Zweckmäßigerweise verfügt auch der erste Abschlussdeckel 3 über seitliche erste und zweite Montageflächen 67, 75, so dass die elektrische Antriebseinrichtung 8 alternativ auch dort angebaut werden kann. Man kann die Montageflächen am ersten Abschlussdeckel 3 im Übrigen auch dazu nutzen, weitere anzutreibende Einheiten anzuschließen.

## Patentansprüche

1. Elektrischer Linearantrieb, mit einem Gehäuse (2), das ein sich längs einer zentralen Mittelachse (54) erstreckendes Hohlprofilteil (5) aufweist, in dem sich ein Antriebselement (12) längs erstreckt, das elektromotorisch zu einer Antriebsbewegung (22a, 22b) antreibbar ist, aus der eine in Längsrichtung des Hohlprofilteils (5) orientierte lineare Abtriebsbewegung (14) eines Abtriebsteils (13) resultiert, das an einer Haupt-Außenfläche (32) des Hohlprofilteils (5) angeordnet und durch einen in der Wandung des Hohlprofilteils (5) ausgebildeten, außen zu der Haupt-Außenfläche (32) ausmündenden Längsschlitz (28) hindurch mit dem Antriebselement (12) antriebsmäßig gekoppelt ist, wobei die mittige Längsachse (55) des Längsschlitzes (28) und die zur Mittelachse (54) des Hohlprofilteils (5) parallele Mittelachse (56) des Antriebselementes (12) in einer die Haupt-Außenfläche (32) schneidenden gemeinsamen Antriebsebene (57) liegen, **dadurch gekennzeichnet, dass** die Antriebsebene (57) mit Abstand quer versetzt neben der Mittelachse (54) des Hohlprofilteils (5) verläuft.

2. Linearantrieb nach Anspruch 1, **dadurch gekennzeichnet, dass** die Haupt-Außenfläche (32) des Hohlprofilteils (5) in einer zu der Antriebsebene (57) rechtwinkeligen Hauptebene (42) verläuft.

3. Linearantrieb nach Anspruch 1 oder 2, **dadurch gekennzeichnet, dass** das Hohlprofilteil (5) an der der Haupt-Außenfläche (32) entgegengesetzten Außenseite eine von der Haupt-Außenfläche (32) abgewandte Grundfläche (46) aufweist, von der an ihren beiden Längsrändern (47) je eine sich in Richtung zur Haupt-Außenfläche (32) erstreckende Seitenfläche (48, 49) insbesondere rechtwinkelig abgeht, wobei eine die Mittelachse (54) des Hohlprofilteils (5) enthaltende Mittelebene (58) mittig zwischen den beiden Längsrändern (47), rechtwinkelig zu der Grundfläche (46) und zugleich mit Abstand parallel zu der Antriebsebene (57) verläuft.

4. Linearantrieb nach einem der Ansprüche 1 bis 3, **dadurch gekennzeichnet, dass** das Abtriebsteil (13) an mindestens einer an der Haupt-Außenfläche (32) angeordneten, sich in Längsrichtung des Hohlprofilteils (5) erstreckenden Führungsschiene (43) linear verschiebbar gelagert ist, wobei diese mindestens eine Führungsschiene (43) ausschließlich auf derjenigen Seite der Antriebsebene (57) angeordnet ist, auf der auch eine zu der Antriebsebene (57) parallele, die Mittelachse (54) des Hohlprofilteils (5) enthaltende Mittelebene (58) verläuft.

5. Linearantrieb nach Anspruch 4, **dadurch gekennzeichnet, dass** die mittige Längsachse (64) der mindestens einen Führungsschiene (43), und zweckmäßigerweise die mindestens eine Führungsschiene (43) in ihrer Gesamtheit, auf der der Antriebsebene (57) abgewandten Seite der Mittelebene (58) angeordnet ist.

6. Linearantrieb nach Anspruch 4 oder 5, **dadurch gekennzeichnet, dass** das Abtriebsteil (13) an lediglich einer einzigen Führungsschiene (43) verschiebbar gelagert ist.

7. Linearantrieb nach einem der Ansprüche 1 bis 6, **dadurch gekennzeichnet, dass** das Hohlprofilteil (5) zwischen zwei stirnseitigen Abschlussdeckeln (3, 4) des Gehäuses (2) angeordnet ist, in denen das Antriebselement (12) gelagert ist.

8. Linearantrieb nach Anspruch 7, **dadurch gekennzeichnet, dass** diejenige der beiden diesseits und jenseits der Antriebsebene (57) liegenden seitlichen Außenflächen (65, 66) mindestens eines Abschlussdeckels (3, 4), die rechtwinkelig zu der Antriebsebene (57) den größeren Abstand zu der Antriebsebene (57) aufweist, als Montagefläche (67) für den Anbau einer elektromotorischen Antriebseinrichtung (8) ausgebildet ist, wobei der zwischen der Antriebsebene (57) und der Montagefläche (67) liegende Abschnitt des Abschlussdeckels (3, 4) ein Kupplungsgehäuse (63) bildet, das zur Aufnahme einer die elektromotorische Antriebseinrichtung (8) mit dem Antriebselement (12) antriebsmäßig verbindenden Kupplungseinrichtung (23) dient.

9. Linearantrieb nach Anspruch 8, **dadurch gekennzeichnet, dass** die Kupplungseinrichtung (23) als Steckkupplung ausgebildet ist.

10. Linearantrieb nach Anspruch 8 oder 9, **dadurch gekennzeichnet, dass** die der Montagefläche (67) entgegengesetzte seitliche Außenfläche (66) des mindestens einen Abschlussdekkels (3, 4) als weitere Montagefläche (75) ausgebildet ist, die sich zum Anbau einer elektromotorischen Antriebseinrichtung (8) unter Zwischenschaltung eines separaten Kupplungsgehäuses eignet.

11. Linearantrieb nach einem der Ansprüche 1 bis 10, **dadurch gekennzeichnet, dass** er als Antriebselement (12) einen Zahnriemen (12a) aufweist, der um zwei den Endbereichen des Hohlprofilteils (5) zugeordnete drehbare Umlenkrollen (16) herumgeschlungen ist und dessen einer Trum als sich im Bereich des Längsschlitzes (28) erstreckender Antriebstrum (25) ausgebildet ist, der mit dem Abtriebsteil (13) antriebsmäßig verbunden ist, wobei mindestens eine der Umlenkrollen (16) als rotativ antreibbare Antriebsrolle ausgebildet ist.

12. Linearantrieb nach Anspruch 11, **dadurch gekennzeichnet, dass** sich der Antriebstrum (25) auf der der Haupt-Außenfläche (32) entgegengesetzten Innenseite des Längsschlitzes (28) längs diesem erstreckt.

13. Linearantrieb nach Anspruch 11 oder 12, **dadurch gekennzeichnet, dass** der Antriebstrum (25) unterteilt ist und zwei einander zugewandte Endabschnitte (35) aufweist, die jeweils mittels eines den Längsschlitz (28) durchsetzenden Verbindungselementes (36) lösbar an dem Abtriebsteil (13) fixiert sind.

14. Linearantrieb nach einem der Ansprüche 1 bis 13, **dadurch gekennzeichnet, dass** die beiden Umlenkrollen (16) in stirnseitig an dem Hohlprofilteil (8) angeordneten Abschlussdekkeln (3, 4) untergebracht sind.

15. Linearantrieb nach einem der Ansprüche 1 bis 10, **dadurch gekennzeichnet, dass** er als Antriebselement (12) eine mit einem Außengewinde versehene Gewindespindel (12b) aufweist, auf der eine mit dem Abtriebsteil (13) durch den Längsschlitz (28) hindurch antriebsmäßig verbundene Spindelmutter (45) sitzt.

## Claims

1. Electrical linear drive, with a housing (2) which has a hollow section part (5) extending along a centre axis (54) in which there extends axially a drive element (12) which may be driven by an electric motor to make a drive movement (22a, 22b) which results in a linear output movement (14) of an output member (13), oriented in the longitudinal direction of the hollow section part (5), which is mounted on a main outer surface (32) of the hollow section part (5) and coupled to the drive element (12) for drive purposes through a longitudinal slot (28) made in the wall of the hollow section part (5) and leading out to the main outer surface (32), wherein the central longitudinal axis (55) of the longitudinal slot (28) and the centre axis (56) of the drive element (12) parallel to the centre axis (54) of the hollow section part (5) lie in a common driving plane (57) intersecting the main outer surface (32), **characterised in that** the driving plane (57) runs with clearance from and offset laterally to the centre axis (54) of the hollow section part (5).

2. Linear drive according to claim 1, **characterised in that** the main outer surface (32) of the hollow section part (5) runs in a main plane (42) at right-angles to the driving plane (57).

3. Linear drive according to claim 1 or 2, **characterised in that** the hollow section part (5) has on the outer side opposite the main outer surface (32) a base area (46) facing away from the main outer surface (32) and from which, on each of its two longitudinal edges (47), a side face (48, 49) extending towards the main outer surface (32) departs, in particular at right-angles, wherein a centre plane (58) containing the centre axis (54) of the hollow section part (5) runs centrally between the two longitudinal edges (47), at right-angles to the base area (46) and at the same time with clearance from and parallel to the driving plane (57).

4. Linear drive according to any of claims 1 to 3, **characterised in that** the output member (13) is mounted with linear movement capability on at least one guide rail (43) mounted on the main outer surface (32) and extending in the axial direction of the hollow section part (5), wherein the guide rail or rails (43) is/are mounted solely on that side of the driving plane (57) on which there also runs a centre plane (58) parallel to the driving plane (57) and containing the centre axis (54) of the hollow section part (5).

5. Linear drive according to claim 4, **characterised in that** the central longitudinal axis (64) of the guide rail or rails (43), and expediently the guide rail or rails (43) in their totality, is or are located on the side of the centre plane (58) facing away from the driving plane (57).

6. Linear drive according to claim 4 or 5, **characterised in that** the output member (13) is movably mounted on only a single guide rail (43).

7. Linear drive according to any of claims 1 to 6, **characterised in that** the hollow section part (5) is located between two end-face end covers (3, 4) of the housing (2) in which the drive element (12) is mounted.

8. Linear drive according to claim 7, **characterised in that** the one of the two side outer surfaces (65, 66) lying this side and that side of the driving plane (57) has at least one end cover (3, 4) which is at the greater distance from the driving plane (57) at right-angles to the driving plane (57) and is designed as mounting surface (67) for the attachment of a drive device (8) driven by an electric motor, wherein the section of the end cover (3, 4) lying between the driving plane (57) and the mounting surface (67) forms a coupling housing (63) which serves to accommodate a coupling device (23) connecting the electromotive drive device (8) to the drive element (12) for driving purposes.

9. Linear drive according to claim 8, **characterised in that** the coupling device (23) is in the form of a plug-in coupling.

10. Linear drive according to claim 8 or 9, **characterised in that** the side outer surface (66) of the end cover or covers (3, 4) opposite the mounting surface (67) is designed as a further mounting surface (75) suitable for the attachment of a drive device (8) driven by an electric motor, with interconnection of a separate coupling housing.

11. Linear drive according to any of claims 1 to 10, **characterised in that** it has as drive element (12) a toothed belt (12a) which is looped around two rotatable guide pulleys (16) assigned to the end sections of the hollow section part (5), and the one strand of which is designed as a drive strand (25) extending in the area of the longitudinal slot (28) and connected to the output member (13) for drive purposes, wherein at least one of the guide pulleys (16) is in the form of a drive pulley which may be driven to rotate.

12. Linear drive according to claim 11, **characterised in that** the drive strand (25) extends along the inner side of the longitudinal slot (28) opposite the main outer surface (32).

13. Linear drive according to claim 11 or 12, **characterised in that** the drive strand (25) is divided and has two facing end sections (35), each fixed releasably to the output member (13) by means of a connecting element (36) passing through the longitudinal slot (28).

14. Linear drive according to any of claims 1 to 13, **characterised in that** the two guide pulleys (16) are accommodated in end covers (3, 4) located on the end faces of the hollow section part (8).

15. Linear drive according to any of claims 1 to 10, **characterised in that** as drive element (12) it has a threaded spindle (12b) provided with an external thread and on which rests a spindle nut (45) connected to the output member (13) through the longitudinal slot (28) for drive purposes.

## Revendications

1. Entraînement linéaire électrique, avec un carter (2), lequel présente un profil creux (5) s'étendant le long d'un axe médian central (54), dans lequel un élément d'entraînement (12) s'étend longitudinalement, lequel peut être entraîné de manière électromotrice afin de réaliser un mouvement d'entraînement (22a, 22b), lequel résulte en un mouvement d'entraînement linéaire (14) orienté en direction longitudinale du profil creux (5) d'un élément entraîné (13), lequel est disposé sur une surface extérieure principale (32) du profil creux (5) et est couplé à travers une rainure linéaire (28) formée dans la paroi du profil creux (5) et débouchant à l'extérieur vers la surface extérieure principale (32) à l'élément d'entraînement (12) de manière entraînante, l'axe longitudinal médian (55) de la rainure linéaire (28) et l'axe médian (56) parallèle à l'axe médian (54) du profil creux (5) de l'élément d'entraînement (12) se situant dans un plan d'entraînement commun (57) en intersection avec la surface extérieure principale (32), **caractérisé en ce que** le plan d'entraînement (57) s'étend à une distance en décalage transversal à côté de l'axe médian (54) du profil creux (5).

2. Entraînement linéaire selon la revendication 1, **caractérisé en ce que** la surface extérieure principale (32) du profil creux (5) s'étend dans un plan principal (42) en angle droit par rapport au plan d'entraînement (57).

3. Entraînement linéaire selon la revendication 1 ou 2, **caractérisé en ce que** le profil creux (5) présente, sur le côté extérieur opposé à la surface extérieure principale (32), une surface de base (46) tournant le dos à la surface extérieure principale (32) et dont les deux bords longitudinaux (47) constituent le point de départ, en particulier en angle droit, d'une surface latérale (48, 49) respective s'étendant en direction de la surface extérieure principale (32), un plan médian (58) comprenant l'axe médian (54) du profil creux (5) s'étendant au milieu entre les deux bords longitudinaux (47), en angle droit par rapport à la surface de base (46) et simultanément à distance parallèlement au plan d'entraînement (57).

4. Entraînement linéaire selon l'une des revendications 1 à 3, **caractérisé en ce que** l'élément entraîné (13) est monté de manière à pouvoir coulisser linéairement sur au moins un rail de guidage (43) disposé sur la surface extérieure principale (32) et s'étendant en direction longitudinale du profil creux (5), ce ou ces rails de guidage (43) étant disposés exclusivement sur celui des côtés du plan d'entraînement (57) sur lequel s'étend également un plan médian (58) parallèle au plan d'entraînement (57) et comprenant l'axe médian (54) du profil creux (5).

5. Entraînement linéaire selon la revendication 4, **caractérisé en ce que** l'axe longitudinal médian (64) de ce ou ces rails de guidage (43), et de manière utile ce ou ces rails de guidage (43) dans leur globalité, sont disposés sur le côté du plan médian (58) tournant le dos au plan d'entraînement (57).

6. Entraînement linéaire selon la revendication 4 ou 5, **caractérisé en ce que** l'élément entraîné (13) est monté de manière à pouvoir coulisser seulement sur un seul rail de guidage (43).

7. Entraînement linéaire selon l'une des revendications 1 à 6, **caractérisé en ce que** le profil creux (5) est disposé entre deux couvercles de fermeture (3, 4) frontaux du carter (2), dans lesquels l'élément d'entraînement (12) est logé.

8. Entraînement linéaire selon la revendication 7, **caractérisé en ce que** celle des deux surfaces extérieures latérales (65, 66) situées d'un côté et de l'autre du plan d'entraînement (57) d'au moins un couvercle de fermeture (3, 4), laquelle présente la plus grande distance par rapport au plan d'entraînement (57) en angle droit par rapport au plan d'entraînement (57), est réalisée en tant que surface de montage (67) pour l'ajout d'un dispositif d'entraînement électromoteur (8), la partie du couvercle de fermeture (3, 4) située entre le plan d'entraînement (57) et la surface de montage (67) formant un carter de couplage (63) servant à réceptionner un dispositif d'accouplement (23) reliant par entraînement le dispositif d'entraînement électromoteur (8) et l'élément d'entraînement (12).

9. Entraînement linéaire selon la revendication 8, **caractérisé en ce que** le dispositif d'accouplement (23) est réalisé en tant qu'accouplement à emboîtement.

10. Entraînement linéaire selon la revendication 8 ou 9, **caractérisé en ce que** la surface extérieure latérale (66) de ce ou ces couvercles de fermeture (3, 4) opposée à la surface de montage (67) est réalisée en tant qu'autre surface de montage (75), laquelle convient pour l'ajout d'un dispositif d'entraînement électromoteur (8) en montant de manière intermédiaire un carter de couplage distinct.

11. Entraînement linéaire selon l'une des revendications 1 à 10, **caractérisé en ce qu'**il présente en guise d'élément d'entraînement (12) une courroie crantée (12a), laquelle est enroulée autour de deux poulies de renvoi rotatives (16) associées aux zones d'extrémité du profil creux (5) et dont l'un des tambours est réalisé en tant que tambour d'entraînement (25) s'étendant dans la zone de la rainure linéaire (28), lequel tambour est relié par entraînement à l'élément entraîné (13), au moins une des poulies de renvoi (16) étant réalisée en tant que poulie de renvoi pouvant être entraînée.

12. Entraînement linéaire selon la revendication 11, **caractérisé en ce que** le tambour d'entraînement (25) s'étend le long de la rainure linéaire (28) sur le côté intérieur de celle-ci opposé à la surface extérieure principale (32).

13. Entraînement linéaire selon la revendication 11 ou 12, **caractérisé en ce que** le tambour d'entraînement (25) est subdivisé et présente deux parties d'extrémité (35) tournées l'une vers l'autre, lesquelles sont respectivement fixées de manière détachable sur l'élément entraîné (13) à l'aide d'un élément de connexion (36) traversant la rainure linéaire (28).

14. Entraînement linéaire selon l'une des revendications 1 à 13, **caractérisé en ce que** les deux poulies de renvoi (16) sont logées dans des couvercles de fermeture (3, 4) disposés du côté frontal sur le profil creux (8).

15. Entraînement linéaire selon l'une des revendications 1 à 10, **caractérisé en ce qu'**il présente en tant qu'élément d'entraînement (12) une broche filetée (12b) munie d'un filetage extérieur, sur laquelle est posé un écrou de broche (45) relié par entraînement à l'élément entraîné (13) à travers la rainure linéaire (28).
